# EUROPEAN PATENT APPLICATION

(11) **EP 2 889 561 A1**
(43) Date of publication of application: **01.07.2015**
(21) Application number: 14831692.0
(22) Date of filing: 13.05.2014
(51) Int. Cl.: F25D 11/00, C25B 1/04, B01D 35/00

(54) **COLD/HOT HYDROGEN WATER DISPENSER**

(30) Priority: 27.02.2014 KR 20140023273
(71) Applicant: Kim, Il Bong, Hanam-si, Gyeonggi-do 465-725 (KR)
(72) Inventor: PARK, In Chol, Siheung-si Gyeonggi-do 429-907 (KR); KIM, II Bong, Hanam-si, Gyeonggi-do 465-725 (KR)
(74) Representative: RGTH
(86) International application number: PCT/KR2014/004246
(87) International publication number: WO 2015/016469

(57) **Abstract**

Disclosed herein is a hydrogen-containing hot and cold water dispenser including a main body which stores water supplied from a mineral water container located at an upper portion thereof by a certain amount and supplies the stored water, an electrolytic device which is provided in the main body and generates a certain amount of hydrogen to dissolve the hydrogen in the stored water, and a power supply device which converts AC power into DC power to supply the converted DC power to the electrolytic device.

## Description

### CROSS-REFERENCE TO RELATED APPLICATION

This application claims priority to Korean Patent Application No. 10-2014-0023273, filed on February 27, 2014 in the Korean Intellectual Property Office, the disclosure of which is incorporated herein by reference in its entirety.

### BACKGROUND OF THE INVENTION

### Field of the Invention

The present invention relates to a hydrogen-containing hot and cold water dispenser, and more particularly, to a hydrogen-containing hot and cold water dispenser provided with an electrolytic unit capable of electrolyzing water so as to generate dissolved hydrogen and simultaneously fill an upper space in which a mineral water container is located with ozone generated from an anode of the electrolytic unit so that external air containing bacteria may be supplied to the mineral water container in a sterilized state by ozone, thereby enabling prevention of water contamination due to air in the mineral water container in advance and supply of water containing dissolved hydrogen.

### Description of the Related Art

In general, a hot and cold water dispenser is an apparatus which allows a user to use hot water or cold water by division of stored water.

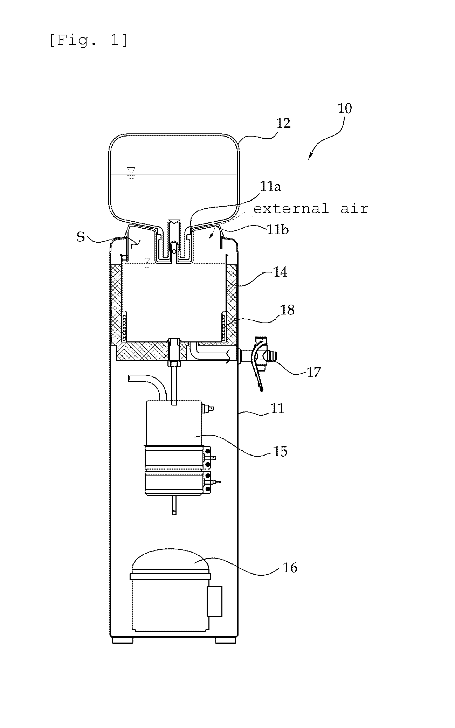

As shown in Fig. 1, such a hot and cold water dispenser 10 has a structure in which a receiving hole 11a is formed at an upper portion of a body 11 having a case shape such that a mineral water container 12 is coupled to the receiving hole 11a, and an air inlet 11b communicating with a space S is formed such that water is easily supplied from the mineral water container. In addition, the hot and cold water dispenser 10 includes therein a cold water tank 14 for storing water discharged from the mineral water container by a certain amount, a heat insulation cover arranged around the cold water tank 14 so as to uniformly maintain temperature of cold water, an evaporation coil 18 arranged at a lower end edge of the cold water tank 14 such that a refrigeration cycle is formed by a lower compressor 16 together with the evaporation coil 18 to thereby change water into cold water, and a hot water tank 15 which is arranged beneath the cold water tank and has a heater unit (not shown) for heating and storing water supplied from the mineral water container.

That is, the conventional hot and cold water dispenser has a structure in which, after water supplied from the mineral water container 12 is changed into cold water, cold water is stored in the cold water tank and hot water is heated and stored in the hot water tank so that a user receives water required whenever selectively using a hot and cold water supply cock.

However, there is a problem in that water supplied in this way is exposed to bacteria during circulation or storage thereof and bacteria are generated in the water.

A technique to overcome this problem is disclosed in Korean Patent Laid-Open Publication No. 10-2011-0001376, Korean Patent Laid-Open Publication No. 10-2013-0015955, Korean Patent Publication No. 10-1196335, Korean Patent Publication No. 10-1258314, and Korean Patent Publication No. 10-0753204.

However, the conventional hot and cold water dispenser has problems in that external air is introduced into the mineral water container through the air inlet and the space of the body and contaminated air (having bacteria, dust, etc.) is introduced into the mineral water container since a water level is adjusted by discharging water in the mineral water container according to a decrease in the water level, with the consequence that bacteria bleed within the mineral water container having a large amount of moisture and hot or cold water is thereby supplied to a user in a contaminated state.

Meanwhile, hydrogen water is increasingly interested in recent years as functional water such as representative alkali ion water is widely known to have a positive medical effect since the 1980s. According to a result of analyzing internationally known miracle water such as Lourdes spring water in France, Nordenauer water in Germany, and Tlacote water in Mexico by Japanese scientists in the 1997, it has been confirmed that this spring water contains dissolved hydrogen and the alkali ion water is effective in treating diabetes, hypertension, and the like because of containing dissolved hydrogen of approximately 0.1 to 0.3 ppm.

Many studies have been published in which hydrogen capable of passing through cell membranes is the most effective substance capable of eliminating active oxygen in cells after the medical world reports that the active oxygen wholly causes human diseases of approximately 90%. In particular, it has been confirmed by the Japanese medical world that hydrogen has a function of emitting radioactivity accumulated in the human body. The easiest method of absorbing such hydrogen involves drinking hydrogen water containing hydrogen dissolved in drinking water and high concentration hydrogen water may be obtained by electrolyzed water generated from a cathode using electrolysis of water.

Accordingly, there needs a technique capable of always supplying water containing dissolved hydrogen and sterilized water from a worldwide used hot and cold dispenser.

### SUMMARY OF THE INVENTION

Accordingly, the present invention is directed to a hydrogen-containing hot and cold water dispenser that substantially obviates one or more problems due to limitations and disadvantages of the related art.

An object of the present invention is to provide a hydrogen-containing hot and cold water dispenser provided with an electrolytic unit capable of electrolyzing water so as to generate dissolved hydrogen and simultaneously fill an upper space in which a mineral water container is located with ozone generated from an anode of the electrolytic unit so that external air containing bacteria may be supplied to the mineral water container in a sterilized state by ozone, thereby enabling prevention of water contamination due to air in the mineral water container in advance and supply of water containing dissolved hydrogen.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

In accordance with an aspect of the present invention, a hydrogen-containing hot and cold water dispenser includes a main body which stores water supplied from a mineral water container located at an upper portion thereof by a certain amount and supplies the stored water, an electrolytic device which is provided in the main body and generates a certain amount of hydrogen to dissolve the hydrogen in the stored water, and a power supply device which converts AC power into DC power to supply the converted DC power to the electrolytic device.

The main body may be provided therein with a water level sensor which is provided in a cold water tank for storing cold water to sense a level of water supplied from the mineral water container.

The cold water tank may be provided therein with a separation plate which allows water vapor boiled in a hot water tank to not affect a cold water temperature and simultaneously maximizes a concentration of dissolved hydrogen in water.

The power supply device may perform supply and shut-off of power by connecting an operation unit provided in a cock and a lead switch provided in the main body.

The operation unit may be a magnet.

The electrolytic device may include a body having a movement passage and an electrolytic unit arranged at a lower portion of the body to generate hydrogen.

The body may include a bracket located at an upper portion thereof, a holding protrusion protruding from an end of the bracket, a housing located at the lower portion of the body to be coupled with the electrolytic unit, and a grounded cathode plate and a grounded anode plate which are arranged at one side of the body to supply power to the electrolytic unit.

The body may be formed with a water inlet connected to the movement passage. The water inlet may be opened in a direction opposite to the movement passage.

The electrolytic unit may include a cathode frame arranged at a lower portion of the housing, an anode frame arranged at a lower portion of the cathode frame, a cathode plate and an anode plate which are arranged between the cathode frame and the anode frame so as to be operated by receiving power from the grounded cathode plate and the grounded anode plate, and a polymeric ion exchange resin membrane arranged between the cathode plate and the anode plate.

A gasket for pressing and sealing the polymeric ion exchange resin membrane may be provided between the cathode frame and the anode frame.

The electrolytic unit may be configured such that the anode plate and cathode plate are operated in forward and reverse directions by the power supply device.

Ozone gas may be generated by a reaction with oxygen gas generated in a lower portion of the grounded anode plate through a reaction formula of O₂ + H₂O = O₃ + 2e⁻ + 2H⁺.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a cross-sectional view illustrating a conventional typical hot and cold water dispenser;
Fig. 2 is a cross-sectional view illustrating a hydrogen-containing hot and cold water dispenser according to an embodiment of the present invention;
Fig. 3 is a perspective view illustrating an electrolytic device shown in Fig. 2;
Fig. 4 is an exploded perspective view illustrating the electrolytic device shown in Fig. 3; and

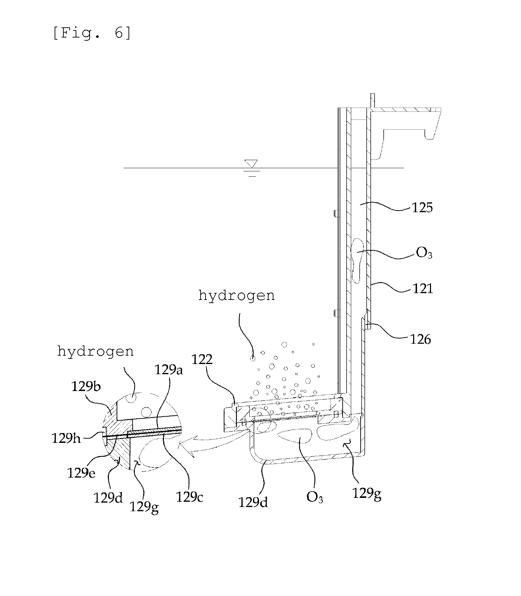

Figs. 5 and 6 are views illustrating an operation state of the electrolytic device according to the embodiment of the present invention.

### DETAILED DESCRIPTION OF EMBODIMENTS

Exemplary embodiments of the present invention will be described below in more detail with reference to the accompanying drawings.

It should be understood that the following specific structural and functional descriptions are merely examples given for the purpose of providing a description of the exemplary embodiments according to the concept of the present invention. Accordingly, various variations may be performed on the exemplary embodiments of the present invention, and it should be understood that the scope and spirit of the present invention will not be limited only to the exemplary embodiments presented in the description of the present invention set forth herein.

Since various variations may be performed on the exemplary embodiments according to the concept of the present invention and the embodiments of the present invention can be realized in a wide range of varied forms, specific exemplary embodiments of the present invention will be described herein in detail with reference to the appended drawings of the exemplary embodiments of the present invention. However, the present invention will not be limited only to the specific exemplary embodiments of the present invention which are disclosed herein. Therefore, it should be understood that the scope and spirit of the present invention can be extended to all variations, equivalents, and replacements in addition to the appended drawings of the present invention.

Furthermore, the terms including expressions, such as first and/or second, used in the specification of the present invention may be used to describe various elements of the present invention. However, the elements of the present invention should not be limited by the terms used in the specification of the present invention. In other words, such terms will be used only to differentiate one element from other elements of the present invention. For example, without deviating from the scope and spirit of the present invention, a first element may be referred to as a second element, and, similarly, a second element may also be referred to as a first element.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Other expressions for describing relationships between elements, for example, "between" and "immediately between" or "neighboring" and "directly neighboring" may also be understood likewise.

The terminology used in the specification of the present invention is for the purpose of describing particular embodiments only and is not intended to limit the invention. As used in the specification and the appended claims, the singular forms "a", "an" and "the" are intended to include the plural forms as well, unless context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms, including technical and scientific terms, used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

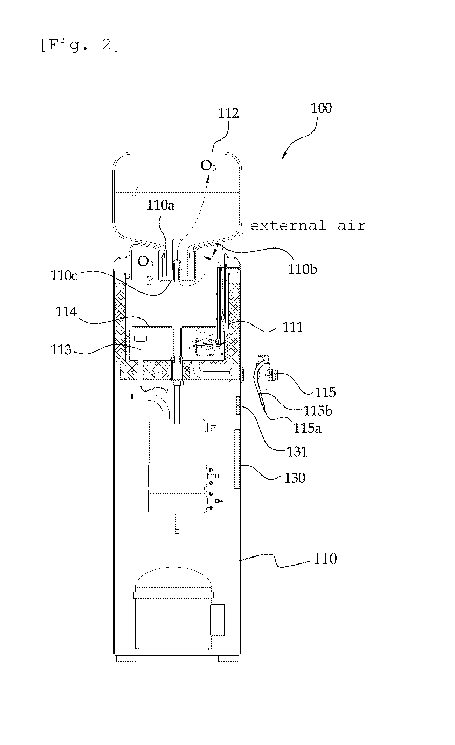

As shown in Fig. 2, a hydrogen-containing hot and cold water dispenser 100 according to an embodiment of the present invention includes a main body 110, an electrolytic device 120, and a power supply device 130.

The main body 110, a hot water tank, a compressor, an evaporation coil, a heat insulation cover, a cold water tank 111, a mineral water container 112, a cock 115, and the like are installed similar to configurations of the conventional hot and cold water dispenser.

In addition to these configurations, the hydrogen-containing hot and cold water dispenser 100 further includes a water level sensor 113 which measures a level of water stored in the cold water tank 112, and a separation plate 114 which allows water vapor boiled in the hot water tank to not affect a cold water temperature and generates a vortex in the cold water tank so as to delay ascending of hydrogen and increase a concentration of dissolved hydrogen in water. In addition, the separation plate 114 may be formed with embossing which enables an increase in a surface area of hydrogen so that the ascending speed of hydrogen is decreased during ascending thereof in water. The separation plate 114 may have any structure so long as the ascending of hydrogen may be decreased in water.

That is, the water level sensor uniformly maintains the level of the stored water in connection with the power supply device to be described later and is concerned in operation of the power supply device. The separation plate 114 delays a time at which hydrogen gas reaches an upper portion of the dispenser when ascending in water so as to increase a concentration of dissolved hydrogen in water.

In addition, the main body 110 is formed with an air inlet 110b for introducing air into the main body when water is discharged from the mineral water container 112 and a mineral water container receiving hole 110a by which the mineral water container may be held at the main body. The mineral water container receiving hole 110a is formed, at a lower portion thereof, with a lower surface 110c having a stepped shape such that the mineral water container is blocked when the lower surface 110c touches the surface of the stored water.

The cock 115 is operated to allow a user to drink the stored water, and includes a cock lever 115a and a sensing unit 115b formed in the cock lever 115a. The sensing unit 115b preferably uses a magnet. Such a configuration will be described in detail later together with the power supply device.

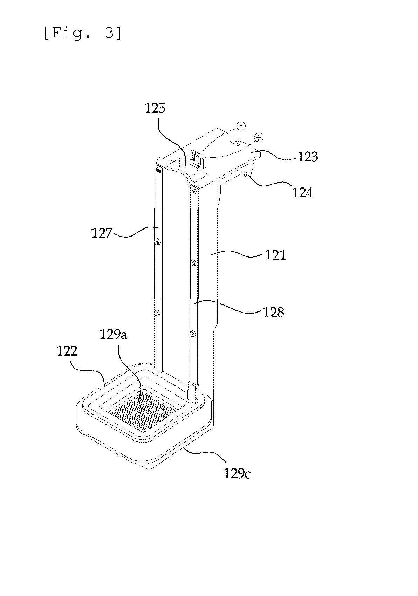

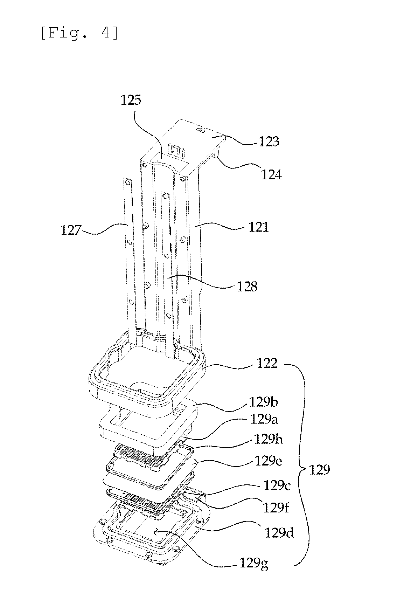

The electrolytic device 120 is provided in the cold water tank 111 and generates hydrogen gas through electrolysis in water so as to add dissolved hydrogen to water. As shown in Figs. 3 and 4, the electrolytic device 120 includes a body 121 and an electrolytic unit 129.

The body 121 has a certain length and is formed therein with a movement passage 125. The body 121 is formed, at a lower end thereof, with a housing 122 which forms an inclined angle with the body 121 and is perpendicular thereto. The body 121 is formed, at an upper end thereof, with a bracket 123 which is perpendicular in a direction opposite to the housing 122. The bracket 123 is formed, at a lower end thereof, with a holding protrusion 124.

In addition, the body 121 is formed, at a vertical surface thereof, with a grounded cathode plate 127 and a grounded anode plate 128 through which external power is supplied to the electrolytic unit.

The body is formed, at a rear surface thereof, with a water inlet 126 which communicates with the movement passage 125 to prevent ozone (O₃) moved through the movement passage 125 from flowing backward and serves as a passage of water stored in the cold water tank. The water inlet 126 is obliquely formed in a direction opposite to the movement passage 125.

That is, the water inlet 126 is obliquely formed upward from a rear surface end of the body to meet with the movement passage. Thus, the water inlet 126 has a structure in which water moves through the water inlet and ozone (O₃) is prevented from being introduced into the cold water tank due to flowing backward thereof.

The electrolytic unit 129 includes a cathode plate 129a which is located on a lower surface of the housing 122 and is fixedly coupled to the housing 122 by a cathode frame 129b, an anode plate 129c which is located beneath the cathode plate 129a in a state of being spaced apart from the cathode plate 129a by a certain interval and is fixedly coupled to the housing 122 by an anode frame 129d, and a polymeric ion exchange resin membrane 129e which is arranged between the cathode plate 129a and the anode plate 129c and mutually blocks the cathode plate 129a and the anode plate 129c. The ion exchange resin membrane 129e has a leak prevention structure by a gasket arranged each between the cathode plate and the anode plate.

In addition, the anode frame 129d is formed with a connection hole 129f connected to the movement passage 125. A space 129g receiving ozone (O₃) bubbles generated from the anode plate is formed at a position adjacent to the connection hole.

Meanwhile, a gasket 129h for pressing and sealing the polymeric ion exchange resin membrane 129e is provided between the cathode frame 129b and the anode frame 129d so that the cold water tank and the space 129g are blocked in order for ozone generated in the space to be prevented from flowing to the cold water tank.

That is, when power is applied to the cathode plate 129a and the anode plate 129c to generate an electrolytic reaction in the electrolytic unit, the following reactions are performed between the two electrode plates.

Anode: 2H₂O (I) = O₂ (g) + 4e⁻ + 4H⁺ (aq)

O₂ + H₂O = O₃ + 2e⁻ + 2H⁺

Cathode: 4H⁺ (aq) + 4e⁻ = 2H₂ (g)

According to the above reaction formulas, oxygen gas is generated in the anode to be dissolved in water within the space 129g receiving ozone (O₃) bubbles or is generated as fine gas phase in the space to be condensed and form large bubbles and is then filled in the space S of the upper portion of the cold water tank via the connection hole 129f connected to the movement passage 125. Dissolved hydrogen ions generated in the anode reaction are moved to the cathode through the polymeric ion exchange resin membrane, and receive electrons from the cathode plate to thereby generate hydrogen gas. The hydrogen gas is generated in the cold water tank in the form of bubbles because of having large solubility with respect to water. Accordingly, the hydrogen gas is mostly dissolved in the stored water in the middle of ascending upward, with the consequence that hydrogen-enriched water is generated.

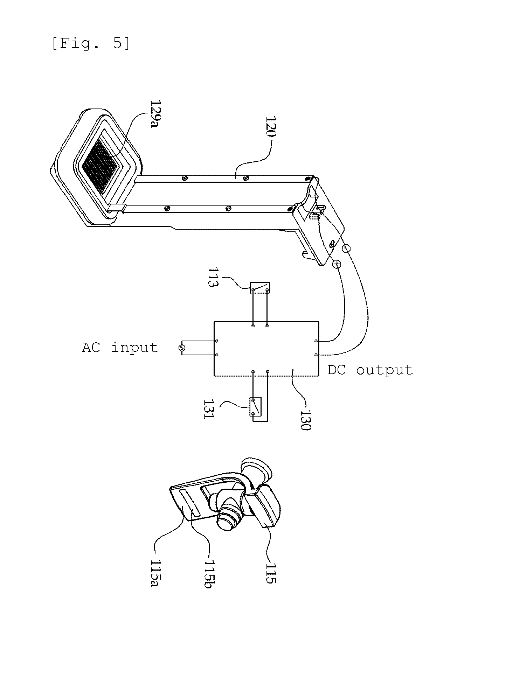

As shown in Figs. 2 and 5, the power supply device 130 is included in the main body 110 to configure a closed circuit, and is electrically connected to the water level sensor 113 arranged in the cold water tank, and has a lead switch 131 arranged inside the power supply device. In addition, the power supply device 130 has a member for converting AC (alternating current) power into DC (direct current) power and is connected to the grounded cathode plate 127 and the grounded anode plate 128 of the electrolytic device 120 through wires.

That is, the power supply device 130 converts AC power supplied to the hydrogen-containing hot and cold water dispenser into DC power to supply the converted power to the electrolytic device so that water may be electrolyzed by the electrolytic device. When a user presses the lever 115a installed to the cock 115 for drinking water, the electrolytic device is operated in such a way that the sensing unit 115b provided in the lever is close to the lead switch installed to the main body and the lead switch is operated using a magnetic field to thereby apply power. Although the present invention has been described that the lead switch is operated using the magnet, the present invention may include any configuration so long as the lead switch may be operated.

Meanwhile, the electrolytic device of the present invention may be detachably attached to the cold water tank. That is, since the electrolytic device is arranged in a state of being held at the upper end of the cold water tank 111 using a holding protrusion 124 of the bracket 123 disposed perpendicularly to the upper portion of the body 121, the electrolytic device may be easily detached during maintenance thereof. In addition, although not shown, fixed force of the electrolytic device may also be reinforced in such a way that the electrolytic device is pressed against the cold water tank using an elastic member provided at the holding protrusion.

Hereinafter, an operation state of the present invention will be described with reference to the accompanying drawings.

As shown in Fig. 2, the hydrogen-containing hot and cold water dispenser includes the electrolytic device 120 and the power supply device 130 for operating the electrolytic device 120.

In order to contain dissolved hydrogen in the hydrogen-containing hot and cold water dispenser by means of this configuration, when water stored in the mineral water container 112 is first moved to the cold and hot water tanks and is then stored in the cold water tank by a certain amount, the water level is close to the lower surface of the main body, thereby blocking introduction of water.

In this state, when a user presses the lever 115a of the cock 115 for drinking water and water is discharged, the lever 115a is operated by the sensing unit 115b installed to the lever while being close to the lead switch 131. Thus, power is supplied to the power supply device 130.

The supplied AC power is converted into DC power within the power supply device 130, the converted DC power is applied to the grounded cathode plate 127 and the grounded anode plate 128 of the electrolytic device 120, and the grounded cathode plate 127 and the grounded anode plate 128 apply current to the cathode plate 129a and the anode plate 129c connected thereto so that the mutual electrolytic reactions are performed in the cathode plate and the anode plate.

In the electrolysis process, oxygen gas is generated in the anode plate by the electrolytic reaction, and hydrogen gas is generated in the cathode plate and thus the generated hydrogen gas ascends and is dissolved in the cold water tank.

In addition, as shown in Fig. 5, the oxygen gas (O₂) generated in the anode plate 129c reacts with water in the space 129g within the anode frame 129d, thereby generating ozone (O₃).

The reaction formula of ozone is as follows.

O₂ + H₂O = O₃ + 2e⁻ + 2H⁺

The generated ozone gas is condensed in the space to form ozone bubbles, and the formed ozone bubbles ascend through the movement passage 125 defined within the body 121 to be filled in the space S within the main body 110, thereby sterilizing air present in the space S. Consequently, the ozone bubbles are introduced into the mineral water container together with air introduced into the mineral water container when water is discharged from the mineral water container so as to sterilize air within the mineral water container.

In this case, the ozone is supplied through the water inlet 126 connected to the movement passage 125 in proportional to an amount of water removed from the body, but the ozone is prevented from moving to the cold water tank.

That is, the ozone is generated by a reaction of current applied to the cathode plate and the anode plate and a reaction of oxygen gas, as a by-product generated by the reaction, with water. As is well known, since ozone has excellent sterilizing activity, air supplied to the mineral water container may be sterilized by the ozone.

In addition, although the present invention has been described that the electrolytic device is operated only when the cock is operated, the electrolytic device may be operated at regular time intervals using a timer and the like even when the cock is not operated. Therefore, it may be possible to uniformly maintain the concentration of the dissolved hydrogen in the stored water.

Meanwhile, the electrolytic device 120 may be basically operated and adjust the concentration of the dissolved hydrogen in the stored water by operation of the cock. However, since dissolved hydrogen is not present in the stored water in the process of initially supplying water from the mineral water container, hydrogen may be dissolved in the stored water by operating the electrolytic device using the water level sensor for a certain time. In addition, a user may identify a minimally prepared operation state of the electrolytic device using an LED lamp and the like.

In addition, the electrolytic device of the present invention may be reversely operated through a timer or any operation switch by a user.

This enables prevention of mineral cations such as calcium and magnesium dissolved in drinking water from being fixed to the cathode plate due to electrical attraction. The electrolytic device may prevent mineral cations from being fixed to the cathode plate by alternately applying DC power output from the power supply device to the electrolytic device to the anode and the cathode to be operated in forward and reverse directions. In addition, the electrolytic device may be reversely operated for a certain time by reversing the anode and the cathode so as to generate dissolved ozone water by the anode electrolytic reaction in the cold water tank, and thus the inside of the cold water tank may be wholly sterilized and cleaned. In this case, the sterilized and cleaned water is discharged to the outside to be removed.

As is apparent from the above description, the present invention provides a hydrogen-containing hot and cold water dispenser provided with an electrolytic unit capable of electrolyzing water so as to generate dissolved hydrogen and simultaneously fill an upper space in which a mineral water container is located with ozone generated from an anode of the electrolytic unit so that external air containing bacteria may be supplied to the mineral water container in a sterilized state by ozone, thereby enabling prevention of water contamination due to air in the mineral water container in advance and supply of water containing dissolved hydrogen.

Although embodiments have been described with reference to a number of illustrative embodiments thereof, it should be understood that numerous other modifications and applications may be devised by those skilled in the art that will fall within the intrinsic aspects of the embodiments.

More particularly, various variations and modifications are possible in concrete constituent elements of the embodiments. In addition, it is to be understood that differences relevant to the variations and modifications fall within the spirit and scope of the present disclosure defined in the appended claims.

## Claims

1. A hydrogen-containing hot and cold water dispenser comprising:
a main body which stores water supplied from a mineral water container located at an upper portion thereof by a certain amount and supplies the stored water;
an electrolytic device which is provided in the main body and generates a certain amount of hydrogen to dissolve the hydrogen in the stored water; and
a power supply device which converts AC power into DC power to supply the converted DC power to the electrolytic device.

2. The hydrogen-containing hot and cold water dispenser according to claim 1, wherein the main body is provided therein with a water level sensor which is provided in a cold water tank for storing cold water to sense a level of water supplied from the mineral water container.

3. The hydrogen-containing hot and cold water dispenser according to claim 2, wherein the cold water tank is provided therein with a separation plate which allows water vapor boiled in a hot water tank to not affect a cold water temperature and simultaneously maximizes a concentration of dissolved hydrogen in water.

4. The hydrogen-containing hot and cold water dispenser according to claim 1, wherein the power supply device performs supply and shut-off of power by connecting an operation unit provided in a cock and a lead switch provided in the main body.

5. The hydrogen-containing hot and cold water dispenser according to claim 4, wherein the operation unit is a magnet.

6. The hydrogen-containing hot and cold water dispenser according to claim 1, wherein the electrolytic device comprises a body having a movement passage and an electrolytic unit arranged at a lower portion of the body to generate hydrogen.

7. The hydrogen-containing hot and cold water dispenser according to claim 6, wherein the body comprises a bracket located at an upper portion thereof, a holding protrusion protruding from an end of the bracket, a housing located at the lower portion of the body to be coupled with the electrolytic unit, and a grounded cathode plate and a grounded anode plate which are arranged at one side of the body to supply power to the electrolytic unit.

8. The hydrogen-containing hot and cold water dispenser according to claim 7, wherein the body is formed with a water inlet connected to the movement passage.

9. The hydrogen-containing hot and cold water dispenser according to claim 8, wherein the water inlet is opened in a direction opposite to the movement passage.

10. The hydrogen-containing hot and cold water dispenser according to claim 7, wherein the electrolytic unit comprises a cathode frame arranged at a lower portion of the housing, an anode frame arranged at a lower portion of the cathode frame, a cathode plate and an anode plate which are arranged between the cathode frame and the anode frame so as to be operated by receiving power from the grounded cathode plate and the grounded anode plate, and a polymeric ion exchange resin membrane arranged between the cathode plate and the anode plate.

11. The hydrogen-containing hot and cold water dispenser according to claim 10, wherein a gasket for pressing and sealing the polymeric ion exchange resin membrane is provided between the cathode frame and the anode frame.

12. The hydrogen-containing hot and cold water dispenser according to claim 10, wherein the electrolytic unit is configured such that the anode plate and cathode plate are operated in forward and reverse directions by the power supply device.

13. The hydrogen-containing hot and cold water dispenser according to claim 9, wherein ozone gas is generated by a reaction with oxygen gas generated in a lower portion of the grounded anode plate through a reaction formula of O₂ + H₂O = O₃ + 2e⁻ + 2H⁺.
